# EUROPEAN PATENT SPECIFICATION

(11) **EP 3 317 871 B1**
(45) Date of publication and mention of the grant of the patent: **06.05.2020**
(21) Application number: 15742406.0
(22) Date of filing: 30.06.2015
(51) Int. Cl.: G08G 1/133, G07C 9/00

(54) **METHOD, REGISTRATION DEVICE AND VEHICLE CONTROL NODE FOR GUIDANCE OF A TRANSPORT VEHICLE**
VERFAHREN, REGISTRIERVORRICHTUNG UND FAHRZEUGSTEUERUNGSKNOTEN ZUR FÜHRUNG EINES TRANSPORTFAHRZEUGS
PROCÉDÉ, DISPOSITIF D'ENREGISTREMENT ET NOEUD DE COMMANDE DE VÉHICULE POUR LE GUIDAGE D'UN VÉHICULE DE TRANSPORT

(43) Date of publication of application: 09.05.2018
(73) Proprietor: Telefonaktiebolaget LM Ericsson (PUBL), 164 83 Stockholm (SE)
(72) Inventor: TESLENKO, Maxim, S-19274 Sollentuna (SE); STIKKEL, Gábor, S-191 37 Sollentuna (SE); VULGARAKIS FELJAN, Aneta, S-162 43 Vällingby (SE); KARAPANTELAKIS, Athanasios, S-11829 Stockholm (SE)
(74) Representative: Zacco Sweden AB
(86) International application number: PCT/SE2015/050768
(87) International publication number: WO 2017/003332

(56) References cited:
- EP-A1- 2 541 506
- WO-A1-2015/057142
- JP-A- H0 863 697
- KR-A- 20080 021 281
- US-A1- 2009 128 362
- US-A1- 2012 105 256
- US-A1- 2014 210 650

## Description

### Technical field

The present disclosure relates generally to the field of passenger transportation where a method, a registration device and a vehicle control node are provided for guidance of one or more transport vehicles.

### Background

In the field of passenger transportation, it is a well-known problem that a transport vehicle, such as a bus, train or boat, driving on a predefined route with multiple stops or stations, frequently has to stop at the stops or stations on that route in order to pick up any passengers there, even in case none of the passengers present at a vehicle stop will actually enter the vehicle. For example, a person at the vehicle stop may be waiting for another transport vehicle on a different route, or may just be there for whatever reason without the intention of entering the vehicle that has stopped. In that case, assuming that no-one present on the vehicle wants to get off either, the transport vehicle has stopped in vain at this vehicle stop since there is no passenger that wants to enter or leave the vehicle there.

The drawbacks of such unnecessary stopping at vehicle stops obviously include increased fuel consumption and air pollution, waste of time, and additional strain on the vehicle such as brakes, gears or other parts. This behavior may also be frustrating and tiresome for the vehicle driver and its current passengers on-board.

Various solutions have been developed that can be used for avoiding the above-described unnecessary stopping at vehicle stops on a predefined route. For example, US 2014/0210650 A1 discloses that passengers use their mobile terminals to communicate their intention to enter a transport vehicle at a certain stop, and this "getting-on" information is forwarded from a traffic information system to the driver of the vehicle. Other similar examples are disclosed in US 2008/0054072 A1, US 2013/0158846 A1 and US 5168451 which all require that the passenger use a mobile terminal or the like to actively communicate their travelling intentions or trip instructions.

However, the above-described unnecessary stopping at vehicle stops and stations cannot be avoided in a satisfactory manner by any of the solutions referred to above, unless all passengers use their mobile terminals as described above. Thus, in reality it cannot be expected that all passengers are able or willing to make the effort to communicate their travelling intentions in the manner required by these solutions, e.g. when lacking the necessary communication device. The above-mentioned known solutions and other similar solutions are therefore, ultimately, not very serviceable to achieve satisfaction for every passenger.

### Summary

It is an object of embodiments described herein to address at least some of the problems and issues outlined above. It is possible to achieve this object and others by using a method and apparatus as defined in the attached independent claims.

According to one aspect, a method is provided for guidance of one or more transport vehicles. In this method, the presence of a passenger is detected by a sensor at a vehicle stop, the sensor being associated with a predefined destination or vehicle route. Then, a traveling intention of the passenger is identified based on the detected presence and a notification related to the traveling intention of the passenger is provided to a transport vehicle driving on a predefined route that includes said vehicle stop. According to the method of the invention, a plurality of sensors are installed on different locations at the vehicle stop for detecting presence of passengers, the sensors being associated with different predefined destinations or vehicle routes.

According to another aspect, a registration device is operable at a vehicle stop and arranged to provide information as a basis for guidance of one or more transport vehicles. The registration device comprises a plurality of sensors being installed on different locations at the vehicle stop for detecting presence of passengers, the sensors being associated with different predefined destinations or vehicle routes. The registration device also comprises a sending unit configured to send an indication of the detected presence of the passenger to a vehicle control node. Thereby, the vehicle control node is enabled to provide a notification to at least one transport vehicle driving on a predefined route which includes said vehicle stop, the notification being related to a traveling intention of the passenger according to the detected presence.

According to another aspect, a vehicle control node is arranged for guidance of one or more transport vehicles. The vehicle control node comprises a receiving unit configured to receive an indication of detected presence of a passenger by a sensor at a vehicle stop, the sensor being associated with a predefined destination or vehicle route. The vehicle control node further comprises a logic unit configured to identify a traveling intention of the passenger based on the detected presence, and a providing unit configured to provide a notification related to the identified traveling intention of the passenger, to a transport vehicle driving on a predefined route that includes said vehicle stop. According to the invention, the vehicle control node is adapted to detect the presence of passengers by a plurality of sensors installed on different locations at the vehicle stop, the sensors being associated with different predefined destinations or vehicle routes.

When employing this method and any of the above registration device and vehicle control node, the driver of the transport vehicle is able to optimize the route by stopping only when a passenger intends to enter the vehicle according to his/her traveling intention and skipping any unnecessary stopping. Thereby, various advantages can be accomplished such as reduced fuel consumption and pollution as well as saved time and possible avoidance or reduction of frustration caused by delays.

The above method, registration device and vehicle control node may be configured and implemented according to different optional embodiments to accomplish further features and benefits, to be described below.

A computer program storage product is also provided comprising instructions which, when executed on at least one processor in the vehicle control node, cause the at least one processor to carry out the method described above.

### Brief description of drawings

The solution will now be described in more detail by means of exemplary embodiments and with reference to the accompanying drawings, in which:
Fig. 1 is a communication scenario illustrating a procedure for guidance of a transport vehicle, according to some possible embodiments.
Fig. 2 is a block diagram illustrating an example of a registration device with sensors, according to further possible embodiments.
Fig. 3 is a flow chart illustrating a procedure for guidance of a transport vehicle, according to further possible embodiments.
Fig. 4 is a flow chart illustrating an example of how a vehicle control node may operate, according to further possible embodiments.
Fig. 5 is a signaling diagram illustrating an example of a procedure when the solution is used, according to further possible embodiments.
Fig. 6 is a signaling diagram illustrating another example of a procedure when the solution is used, according to further possible embodiments.
Fig. 7 is a communication scenario illustrating a procedure for guidance of plural transport vehicles, according to further possible embodiments.
Fig. 8 is a block diagram illustrating a node in more detail, according to further possible embodiments.
Fig. 9 is a flow chart illustrating another example of how a vehicle control node may operate, according to further possible embodiments.

### Detailed description

Briefly described, a solution for guidance of one or more transport vehicles is provided to enable passengers waiting at a vehicle stop to indicate their travelling intentions in a simple manner, without requiring the active use of a mobile phone or similar communication device. This solution can be used to avoid unnecessary stopping by a transport vehicle driving on a predefined route that includes said vehicle stop, if no-one intends to enter the vehicle there. The term "vehicle stop" is used herein to represent any stop or station that is comprised in one or more predefined routes taken by one or more vehicles for transporting passengers. Further, a "transport vehicle" in this context may be any type of vehicle for transporting passengers, typically a bus, train or boat, which basically drives on a predefined route passing a succession of vehicle stops where passengers can be picked up by the vehicle.

The problems associated with unnecessary stopping at vehicle stops, as discussed above, may be overcome by employing different sensors for detecting passengers at the vehicle stop which sensors are associated with different predefined destinations or vehicle routes. Thereby, a passenger intending to travel to a specific destination or on a specific route can simply position himself by a sensor that corresponds to that destination or route, which thus does not require any further action from the passenger. Each sensor is basically capable of detecting presence of a human present at a certain position and it may comprise a weight-sensitive pressure plate, a camera, an infra-red detector, a photocell, to mention a few practical non-limiting examples.

By detecting presence of a passenger by such a sensor, a traveling intention of the passenger can be identified according to the destination(s) or vehicle route(s) associated with that sensor and a notification can be provided to an eligible transport vehicle to indicate that the passenger wants to be picked up at the vehicle stop and be transported according the identified traveling intention. If the vehicle has not received any such notification for a particular vehicle stop, which may be indicated in a suitable manner to the driver of the vehicle, the driver can choose to skip this vehicle stop and thus not stop there, thereby avoiding one unnecessary stop on the route. The term "traveling intention" is thus to be understood in this context as a desired destination, e.g. another vehicle stop, or a specific desired route such as a bus or train line.

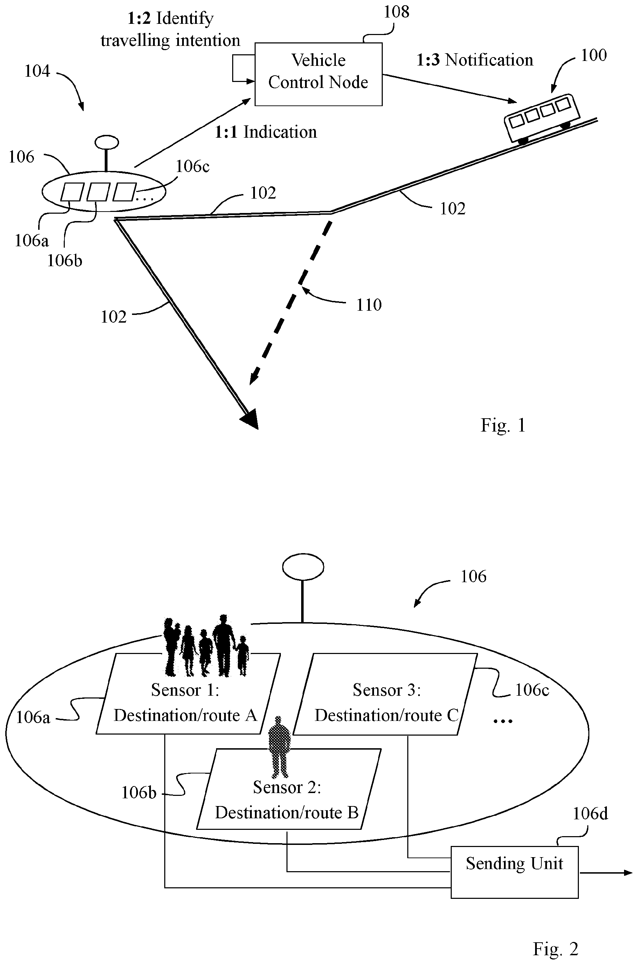

A simplified communication scenario is shown in Fig. 1 which illustrates how the solution may be employed for guiding a transport vehicle 100, in this case a bus, which is currently driving on a schematically illustrated predefined route 102 that includes a vehicle stop 104. The transport vehicle 100 is currently approaching the vehicle stop 104 and it may so far be well out of sight from the stop 104 so that the driver cannot see yet if there are any people present there. And even if he does see a person at the stop, he cannot known if that person wants to get on or not. Only one vehicle is shown in this example although the procedure described herein could be applied for two or more transport vehicles. Furthermore, the vehicle stop 104 may be part of more than one predefined route and the solution is not limited in this respect either.

The vehicle stop 104 is provided with a registration device 106 which comprises a number of sensors 106a, 106b, 106c... where each sensor can be associated with a predefined destination or vehicle route, or even with multiple destinations or routes. Throughout this description the phrase "a predefined destination or vehicle route" is to be understood as at least one predefined destination or vehicle route. This association may be configurable such that a sensor's association to a destination or route can be changed in some sense, e.g. when a vehicle route is created, modified or deleted for whatever reason. Each sensor is also configured to detect the presence of a passenger. As an example, each sensor may comprise a pressure plate that is responsive to a passenger's weight e.g. by means of pressure-sensitive piezo-electric elements or similar mounted on a platform, thus generating an electrical signal when deformed by the passenger's weight. However, the solution is not limited to pressure plates and other examples of passenger "detectors" that can be used as a sensor in this context have been mentioned above.

The sensors 106a, 106b, 106c... are installed at different locations at the vehicle stop 104 for detecting presence of passengers, and suitable signs or labels may be used to indicate each sensor's associated destination or vehicle route such that any passenger can select an appropriate sensor and position himself there, e.g. by stepping on a pressure plate on the platform. Thus, whenever a sensor 106a-c detects presence of a passenger, the registration device 106 in this example sends an indication of the detected passenger presence to a vehicle control node 108, as shown in an **action 1:1.** In this communication, a public wireless or fixed network for telecommunication may be used for conveying the indication to the vehicle control node 108. Alternatively, a private wireless or fixed communication link may be used between the vehicle stop 104 and the vehicle control node 108.

In this example, the vehicle control node 108 can basically be a centrally operating node which can receive indications of passenger presence detected at multiple vehicle stops. Alternatively, the functionality of the vehicle control node 108, to be described below, may be implemented locally e.g. at the vehicle stop 104. The term "vehicle control node" as used in this description should thus be understood as a logical node having the functionality described herein which can be implemented practically in different ways. It is further assumed that the vehicle control node 108 has access to information about various transport vehicles and their current positions on their respective routes, and optionally also about their current average speed so that the time before reaching a certain vehicle stop can be estimated. For example, it might be detected that a transport vehicle is currently stuck in a traffic jam or the like.

Another **action 1:2** illustrates that the vehicle control node 108, having received the notification of passenger presence from the registration device 106, identifies the traveling intention of the detected passenger such as a desired destination or vehicle route depending on which sensor has sensed his/her presence. The received indication may for example indicate a sensor identity that can be translated into its associated destination or vehicle route, or it may indicate the destination or vehicle route more explicitly. Action 1:2 could alternatively be performed by the registration device 106 so that the vehicle control node 108 receives the traveling intention from the registration device 106. By using the available information about currently active transport vehicles, as mentioned above, the vehicle control node 108 is then able to identify the approaching transport vehicle 100 as being a suitable candidate to pick up the passenger and fulfil his desired destination or vehicle route.

A next **action 1:3** illustrates that the vehicle control node 108 sends a notification to the transport vehicle 100, e.g. over a public wireless network or using a suitable dedicated radio link, the notification informing about the traveling intention of the passenger. For example, the notification may simply indicate that there are one or more passengers waiting to enter the vehicle at the vehicle stop 104 which may be displayed or otherwise signaled to the driver in the transport vehicle 100 in a suitable manner. Thereby, the driver can accordingly stop and pick up the passenger(s) at vehicle stop 104, following the predefined route 102. Otherwise, if no such notification is received that indicates presence of any passenger to be picked up, the driver is able to skip the vehicle stop 104 and pass by without stopping or slowing down, thereby saving both time and fuel. For example, a large boat or a train may consume considerable amounts of additional fuel just to slow down, stop and start moving again for several times on a vehicle route which can thus be optimized by skipping any unnecessary vehicle stop as described above. It may even be possible to save further time and fuel by taking another route, as indicated by a dashed arrow 110 which might be a shortcut and/or avoiding a traffic jam on the original route, since the vehicle stop 104 can be omitted from the predefined vehicle route, provided that no-one on the vehicle wants to get off there.

Fig. 2 illustrates in more detail how the above registration device 106 may be configured in the case of using pressure plates as the sensors 106a, 106b, 106c... on which passengers can position themselves. Thus, a first sensor 106a is associated with a certain destination or route A, a second sensor 106b is associated with another destination or route B, a third sensor 106c is associated with a third destination or route C, and so forth. These destinations/routes can be displayed in a suitable manner so that passengers are able to select a desired destinations/route by stepping on the corresponding pressure plate.

The figure illustrates that a number of passengers have selected destination/route A by standing on pressure plate 106a, and that one passenger has selected destination/route B by standing on pressure plate 106b, while no-one is standing on pressure plate 106c. Thereby, an electrical signal issued from each pressure plate 106a, 106b triggers a sending unit 106d at the registration device 106 to send the above-described notification to the vehicle control node 108 as of action 1:1. In this example, an indication of passenger presence at the first and second sensors/pressure plates106a, 106b is thus sent to the vehicle control node 108. This indication may include an approximate estimation of how many passengers have been detected, e.g. based their total weight.

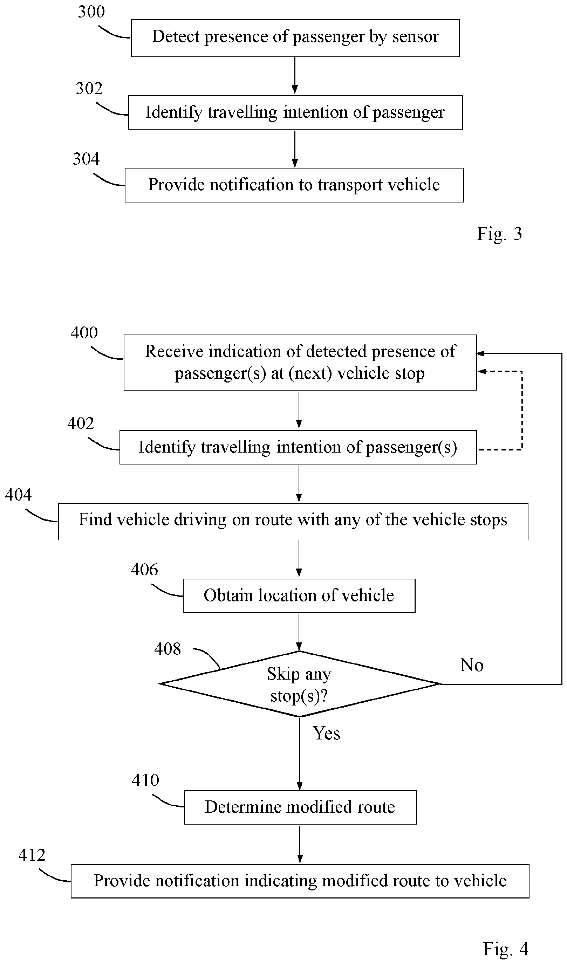

An example of how the solution may be employed in terms of actions will now be described with reference to the flow chart in Fig. 3 which illustrates a procedure for guidance of one or more transport vehicles, which can be used to accomplish the functionality described above. It is assumed that one or more sensors are installed at a vehicle stop where each sensor is associated with a predefined destination or vehicle route, such as the sensors 106a, 106b, 106c... shown in Figs 1 and 2.

A first **action 300** illustrates that the presence of a passenger, or at least one passenger, is detected by a sensor at a vehicle stop, the sensor being associated with a predefined destination or vehicle route. For example, passenger presence may be detected in this action by sensors 106a and 106b in the above example. In some possible embodiments, the sensor may comprise any of: a pressure plate responsive to the passenger's weight, a camera, an infra-red detector and a photocell. In another possible embodiment, a plurality of sensors may be installed on different locations at the vehicle stop for detecting presence of passengers, the sensors being associated with different predefined destinations or vehicle routes.

In a next **action 302,** a traveling intention of the passenger is identified based on the detected presence, which has been described above for action 1:2. A further **action 304** illustrates that a notification related to the traveling intention of the passenger is provided to a transport vehicle driving on a predefined route that includes said vehicle stop, e.g. in the manner described above for action 1:3. Thereby, the driver of that transport vehicle is able to optimize the route by skipping any unnecessary stopping in the manner described above. Potential advantages of this procedure include reduced fuel consumption and pollution as well as saved time and avoiding any frustration caused by delays. These advantages are naturally prominent if a considerable number of stops can be skipped in this manner.

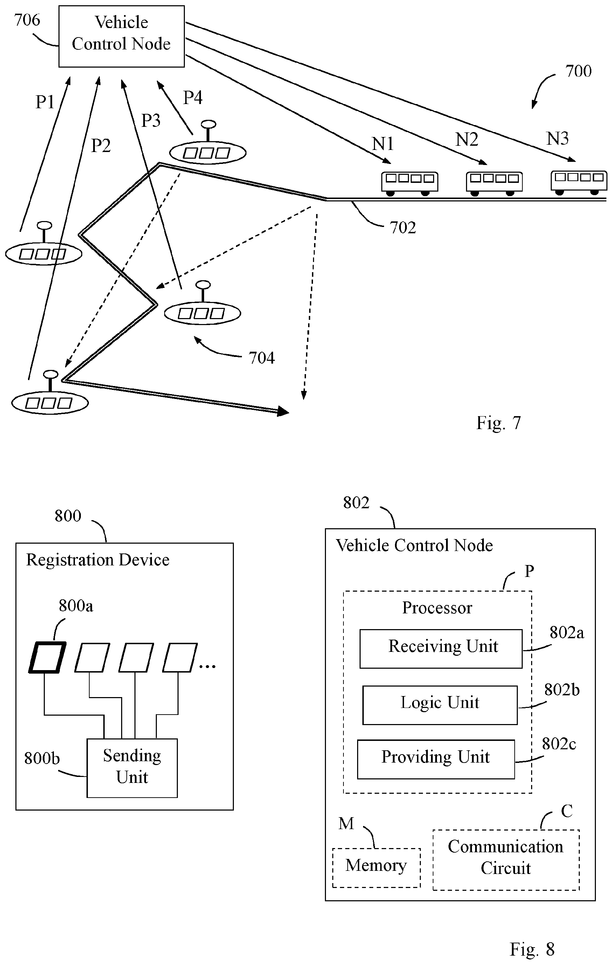

Further embodiments are possible to employ in the above procedure as follows. In one possible embodiment, the notification of action 304 may indicate the sensor's associated predefined destination or vehicle route. In another possible embodiment, the notification may be provided to a plurality of transport vehicles driving on predefined routes which include said vehicle stop. An example of how the latter embodiment may be used will be described later below with reference to Fig. 7.

In further possible embodiments, the method may further comprise determining a modified route for the transport vehicle based on the identified traveling intention of the passenger. An example of such a modified route was shown as numeral 110 in Fig. 1 in case vehicle stop 104 can be skipped by the transport vehicle 100 when no sensor at stop 104 has detected passenger presence for a destination or route that affects the transport vehicle 100. Thus in another possible embodiment, the modified route may exclude said vehicle stop if the passenger does not intend to enter the transport vehicle at the vehicle stop according to the identified traveling intention of the passenger. In yet another possible embodiment, the notification may indicate the modified route.

It was mentioned above that a plurality of sensors may be installed at the vehicle stop which are associated with different predefined destinations or vehicle routes. In a possible embodiment, a modified route may be determined for the transport vehicle depending on detected presence of passengers by the sensors. An example of how this may be done will be described below with reference to Fig. 4.

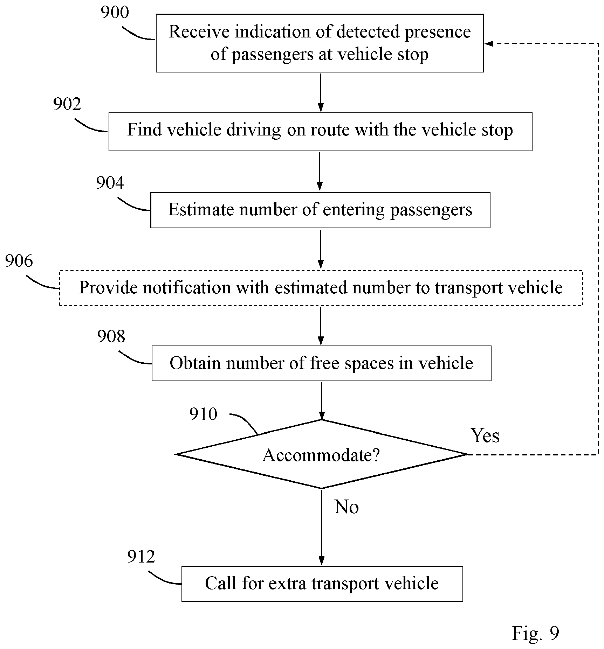

In another possible embodiment, the procedure may further comprise estimating how many passengers are detected by each sensor wherein the notification indicates an estimated number of passengers intending to enter the transport vehicle at the vehicle stop. In another possible embodiment, the procedure may further comprise detecting that all passengers intending to enter the transport vehicle cannot be accommodated by the transport vehicle, and calling for an extra transport vehicle to collect any leftover passengers from the vehicle stop. An example of how the two latter embodiments above may be used will be described later below with reference to Fig. 9.

A more detailed example of a procedure performed by a vehicle control node when operating according to some of the above-described embodiments, will now be described with reference to the flow chart in Fig. 4. The vehicle control node may be configured to operate in the manner described above and as follows. A first **action 400** illustrates that the vehicle control node receives an indication of presence of one or more passengers at a certain vehicle stop, as detected by sensors at that vehicle stop. In a next **action 402,** the travelling intention of the detected passenger(s) is identified based on the detected presence, basically in the manner described for action 1:2 above. A dashed arrow indicates that the actions 400 and 402 may be repeated several times so that the vehicle control node obtains information about detected passenger presence at multiple vehicle stops on a continuous basis. Actions 400 and 402 may thus be executed at any time throughout this procedure, i.e. basically each time a new passenger is detected at a vehicle stop.

In a further **action 404,** the vehicle control node finds, i.e. identifies, a vehicle that is currently driving on a route that includes any of the vehicle stops in which the presence of passengers has been detected, according to the received indications in action 400. It should be noted that more than one such vehicle may be found in this action which can be referred to as "eligible vehicles" in this context. Another **action 406** further indicates that the vehicle control node obtains a current position of the eligible vehicle(s) found in action 404.

The vehicle control node then determines whether any vehicle stop on the predefined route travelled by the (each) vehicle can be skipped, in an **action 408,** i.e. when it can be concluded, from the received indications, that no-one intending to enter the vehicle has been detected at that vehicle stop. If so, a further **action 410** indicates that the vehicle control node modifies the predefined route, e.g. by omitting the vehicle stop as determined in action 408. A final **action 412** illustrates that the vehicle control node provides a notification to the vehicle found in action 404, which notification indicates the modified vehicle route. It should be noted that the driver of the vehicle may still need to stop at the vehicle stop in case any onboard passenger indicates that he wants to get off at the vehicle stop, which is however outside the scope of this procedure. Ultimately, it may thus be up to the driver to take the modified route or not.

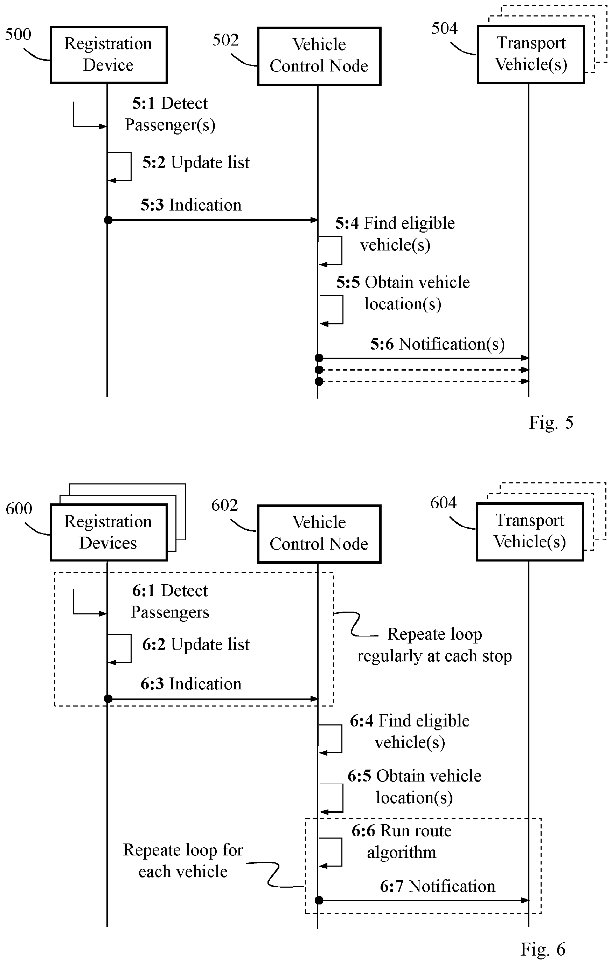

Another example of how the solution may be employed will now be described with reference to the signaling diagram in Fig. 5 involving a registration device 500, a vehicle control node 502 and one or more transport vehicles 504. A first **action 5:1** indicates that the registration device 500 detects one or more passengers at one or more sensors in the manner described above. The registration device 500 then updates a list of detected passengers that is maintained by the registration device 500, in an **action 5:2.** This passenger list may also be updated if a previously detected passenger has left a sensor e.g. for a predetermined duration, assuming that this passenger has changed his mind and no longer intends to travel accordingly.

In a next **action 5:3,** the registration device 500 sends an indication comprising the updated list to the vehicle control node 502 which is then able to find any eligible transport vehicles in **action 5:4** that are potential candidates for picking up any of the detected passengers indicated in the list. Another **action 5:5** illustrates that the registration device 500 further obtains a current location of the transport vehicles found in action 5:4, basically as described above for action 406. The registration device 500 may then select one or more of the vehicles as "best" candidate(s) depending on their current position. A final **action 5:6** illustrates that the registration device 500 sends one or more notifications to one or more such candidate transport vehicles accordingly, basically as described above for action 304.

Another example of how the solution may be employed will now be described with reference to the signaling diagram in Fig. 6 which is similar to the previous example although this example involves a plurality of registration devices 600 at different vehicle stops, a central vehicle control node 602 serving the registration devices 600 and one or more transport vehicles 604. **Actions 6:1, 6:2** and **6:3** are performed by each registration device 600 in the manner described above for actions 5:1, 5:2 and 5:3 which is indicated in the figure as a loop that may be repeated more or less regularly at each stop. Thus, the vehicle control node 602 receives multiple indications from different registration devices 600 e.g. at regular intervals or whenever new passengers are detected. At some point, e.g. at regular intervals, the vehicle control node 602 performs **actions 6:4** and **6:5** in the manner described above for actions 5:4 and 5:5, to obtain necessary information about eligible transport vehicles accordingly.

In this example, the vehicle control node 602 further runs a "route algorithm", in an **action 6:6,** which is configured to determine a modified route for an eligible transport vehicle basically in the manner described above for actions 408, 410, e.g. skipping one or more vehicle stops and possibly also introducing a shortcut or similar that may provide a shorter and/or faster driving route for the vehicle, such as illustrated by numeral 110 in Fig. 1. A notification is then sent to each transport vehicle 604 in a final shown **action 6:7**. Actions 6:6 and 6:7 are repeated as a loop for each candidate transport vehicle 604 found in actions 6:4 and 6:5.

Fig. 7 illustrates another example of a communication scenario involving multiple transport vehicles 700 currently travelling on a route 702, which may be part of different, partly overlapping, vehicle routes travelled by the different transport vehicles 700, wherein the route 702 comprises multiple vehicle stops 704. Registration devices at the vehicle stops 704 send indications of detected passenger presence P1, P2, P3, P4 to a vehicle control node 706 which then may modify respective vehicle routes for the different transport vehicles 700 depending on the received indications. The vehicle control node 706 also sends notifications N1, N2, N3 to the transport vehicles 700, e.g. in the manner described above for action 412, possibly comprising various modifications of their respective routes. As a result, the transport vehicles 700 are enabled to follow the modified routes as indicated by various example dashed arrows in the figure.

The block diagram in Fig. 8 illustrates a detailed but non-limiting example of how a registration device 800 and a vehicle control node 802 may be structured to bring about the above-described solution and embodiments thereof.

The registration device 800 is operable at a vehicle stop and arranged to provide information as a basis for guidance of one or more transport vehicles. The registration device 800 comprises a sensor 800a that can be associated with a predefined destination or vehicle route, the sensor 800a being configured to detect the presence of a passenger. The registration device 800 may comprise several such sensors as shown in the figure. The registration device 800 also comprises a sending unit 800b configured to send an indication of the detected presence of the passenger to a vehicle control node 802, e.g. as in actions 1:1 and 5:3. Thereby, the vehicle control node 802 is enabled to provide a notification to at least one transport vehicle driving on a predefined route which includes said vehicle stop, the notification being related to a traveling intention of the passenger according to the detected presence.

The registration device 800 may be further configured in the manner described above for the registration device 106 in Figs 1 and 2, and it may thus be operable to act as described above for the registration device 106.

The vehicle control node 802 in Fig. 8 may be configured to operate according to any of the examples and embodiments of employing the solution as described above, where appropriate, and as follows. The vehicle control node 802 is shown to comprise a processor "P", a memory "M" and a communication circuit "C" with suitable equipment for transmitting and receiving radio signals in the manner described herein.

The communication circuit C in the vehicle control node 802 comprises equipment configured for communication with a registration device 800 and with one or more transport vehicles, not shown, e.g. over suitable radio interfaces using a suitable protocol for radio communication depending on the implementation. The solution is however not limited to any specific types of communication technology or protocols.

The vehicle control node 802 comprises means configured or arranged to perform at least some of the actions 400-412 and 900-912 of the flow charts in Figs 4 and 9, respectively. The actions of Figs 4 and 9 may be performed by means of functional modules in the respective processor P in the vehicle control node 802.

The vehicle control node 802 is arranged for guidance of one or more transport vehicles. The vehicle control node 802 thus comprises the processor P and the memory M, said memory comprising instructions executable by said processor, whereby the vehicle control node 802 is operative as follows.

The vehicle control node 802 is operative to receive an indication of detected presence of a passenger by a sensor at a vehicle stop, the sensor being associated with a predefined destination or vehicle route. This receiving operation may be performed by a **receiving unit 802a** in the vehicle control node 802, e.g. in the manner described for actions 1.1 and 300 above.

The vehicle control node 802 is also operative to identify a traveling intention of the passenger based on the detected presence. This identifying operation may be performed by a **logic unit 802b,** e.g. in the manner described for actions 1.2 and 302 above. The vehicle control node 802 is also operative to provide a notification related to the identified traveling intention of the passenger, to a transport vehicle driving on a predefined route that includes said vehicle stop. This providing operation may be performed by a **providing unit 802c,** e.g. in the manner described for actions 1.3 and 304 above.

It should be noted that Fig. 8 illustrates various functional modules in the vehicle control node 802, and the skilled person is able to implement these functional modules in practice using suitable software and hardware. Thus, the solution is generally not limited to the shown structures of the vehicle control node 802, and the functional units 802a-c therein may be configured to operate according to any of the features and embodiments described in this disclosure, where appropriate.

The functional units 802a-c described above can be implemented in the vehicle control node 802 by means of program modules of a computer program comprising code means which, when run by the processor P causes the vehicle control node 802 to perform the above-described actions and procedures. Each processor P may comprise a single Central Processing Unit (CPU), or could comprise two or more processing units. For example, each processor P may include a general purpose microprocessor, an instruction set processor and/or related chips sets and/or a special purpose microprocessor such as an Application Specific Integrated Circuit (ASIC). Each processor P may also comprise a storage for caching purposes.

Each computer program may be carried by a computer program product in the vehicle control node 802 in the form of a memory having a computer readable medium and being connected to the processor P. The computer program product or memory M in the vehicle control node 802 thus comprises a computer readable medium on which the computer program is stored e.g. in the form of computer program modules or the like. For example, the memory M in each node may be a flash memory, a Random-Access Memory (RAM), a Read-Only Memory (ROM), an Electrically Erasable Programmable ROM (EEPROM) or hard drive storage (HDD), and the program modules could in alternative embodiments be distributed on different computer program products in the form of memories within the vehicle control node 802.

The solution described herein may be implemented in the vehicle control node 802 by a computer program comprising instructions which, when executed on at least one processor, cause the at least one processor to carry out the actions according to any of the above embodiments, where appropriate. The solution may also be implemented at the vehicle control node 802 in a carrier containing the above computer program, wherein the carrier is one of an electronic signal, optical signal, radio signal, or computer readable storage medium.

Another detailed example of a procedure performed by a vehicle control node when operating according to some of the above-described embodiments, will now be described with reference to the flow chart in Fig. 9. A first **action 900** illustrates that the vehicle control node receives an indication of detected presence of passengers at a vehicle stop, basically corresponding to any of actions 1:1, 400 and 5:3 as described above. A next **action 902** illustrates that the vehicle control node finds a transport vehicle that is currently travelling on a predefined route that includes said vehicle stop, basically corresponding to action 404 or 5:4 as described above. The vehicle control node has thus identified the transport vehicle as a suitable candidate for picking up the detected passengers to fulfil their travelling intentions. Another **action 904** illustrates that the vehicle control node estimates the number of passengers intending to enter the vehicle at the vehicle stop. The vehicle control node may further send a notification with the estimated number of passengers to the transport vehicle, as shown by an optional **action 906.**

Another **action 908** illustrates that the vehicle control node obtains information regarding how many free spaces, e.g. seats or similar, there are at present in the transport vehicle. This information may be obtained by a suitable notification sent from the transport vehicle, e.g. at regular intervals or whenever the number of free spaces changes. The vehicle control node then determines, in an **action 910,** whether the number of free spaces in the transport vehicle is enough to accommodate or receive the number of passengers intending to enter the vehicle at the vehicle stop estimated in action 904. If so, no further action is necessary and the procedure may be repeated by returning to action 900 as indicated by the dashed arrow.

However, if it is determined in action 910 that there are not enough free spaces in the transport vehicle to accommodate the entering passengers, the vehicle control node triggers a call for an extra transport vehicle, in an action 912, to pick up any surplus passengers that cannot be accommodated by the transport vehicle found in action 902. Thereby, it can be automatically detected at an early stage, and in a trustworthy manner, whether there is a need for an extra transport vehicle or not, as compared to a conventional solution relying on the driver to call for an extra transport vehicle when he guesses that the transport vehicle cannot accommodate all passengers intending to enter the vehicle at the vehicle stop. In such a conventional solution it is more or less impossible for the driver to know how many passengers actually intends to enter the vehicle, particularly if there are many persons present at the vehicle stop waiting for various different transport vehicles. In the described solution, action 912 can be performed well before the driver even comes into sight of the vehicle stop.

While the solution has been described with reference to specific exemplifying embodiments, the description is generally only intended to illustrate the inventive concept and should not be taken as limiting the scope of the solution. The solution is defined by the appended claims.

## Claims

1. A method for guidance of one or more transport vehicles, the method comprising:
- detecting (300) presence of passengers by a plurality of sensors installed on different locations at a vehicle stop, the sensors being associated with different predefined destinations or vehicle routes,
- identifying (302) a traveling intention of the passengers based on the detected presence, and
- providing (304) a notification related to the traveling intention of the passengers to a transport vehicle (100) driving on a predefined route (102) that includes said vehicle stop.

2. A method according to claim 1, wherein the notification indicates the sensor's associated predefined destination or vehicle route.

3. A method according to claim 1 or 2, the method further comprising determining (412) a modified route (110) for the transport vehicle based on an identified traveling intention of a detected passenger.

4. A method according to claim 3, wherein the modified route excludes said vehicle stop if the passenger does not intend to enter the transport vehicle at the vehicle stop according to the identified traveling intention of the passenger.

5. A method according to claim 1, wherein a modified route is determined for the transport vehicle depending on detected presence of passengers by the sensors.

6. A method according to any one of preceding claims , the method further comprising estimating (904) how many passengers are detected by each sensor wherein the notification (906) indicates an estimated number of passengers intending to enter the transport vehicle at the vehicle stop.

7. A method according to claim 6, the method further comprising detecting (910) that all passengers intending to enter the transport vehicle cannot be accommodated by the transport vehicle, and calling (912) for an extra transport vehicle to collect any leftover passengers from the vehicle stop.

8. A method according to any one of preceding of claims, wherein the sensors comprise any of: a pressure plate responsive to the passenger's weight, a camera, an infra-red detector and a photocell.

9. A registration device (800) being operable at a vehicle stop and arranged to provide information as a basis for guidance of one or more transport vehicles, the registration device (800) comprising:
- a plurality of sensors (800a) configured to be installed on different locations at the vehicle stop for detecting presence of passengers, wherein the sensors (800a) can be associated with different predefined destinations or vehicle routes, and
- a sending unit (800b) configured to send an indication of the detected presence of the passenger to a vehicle control node (802), thereby enabling the vehicle control node to provide a notification to at least one transport vehicle driving on a predefined route which includes said vehicle stop, the notification being related to a traveling intention of the passenger according to the detected presence.

10. A registration device (800) according to claim 9, wherein the sensor (800a) comprises any of: a pressure plate responsive to the passenger's weight, a camera, an infra-red detector and a photocell.

11. A vehicle control node (802) arranged for guidance of one or more transport vehicles, the vehicle control node comprising a processor (P) and a memory (M) containing instructions executable by the processor whereby the vehicle control node (802) is configured to:
- receive (802a) an indication of detected presence of a passenger by a sensor (800a) at a vehicle stop, the sensor being associated with a predefined destination or vehicle route,
- identify (802b) a traveling intention of the passenger based on the detected presence, and
- provide (802c) a notification related to the identified traveling intention of the passenger, to a transport vehicle driving on a predefined route that includes said vehicle stop **characterized in that** presence of passengers is detected by a plurality of sensors being installed on different locations at the vehicle stop, the sensors being associated with different predefined destinations or vehicle routes.

12. A vehicle control node (802) according to claim 11, wherein the notification indicates the predefined destination or vehicle route associated with the sensor.

13. A vehicle control node (802) according to claim 11 or 12, wherein the vehicle control node (802) is configured to determine a modified route for the transport vehicle based on an identified traveling intention of the passenger.

14. A vehicle control node (802) according to claim 11, wherein the vehicle control node (802) is configured to estimate how many passengers are detected by each sensor wherein the notification indicates the number of passengers intending to enter the transport vehicle at the vehicle stop.

15. A vehicle control node (802) according to claim 14, wherein the vehicle control node (802) is configured to detect that all passengers intending to enter the transport vehicle cannot be accommodated by the transport vehicle, and to call for an extra transport vehicle to collect any leftover passengers from the vehicle stop.

## Patentansprüche

1. Verfahren zur Führung von einem oder mehreren Transportfahrzeugen, wobei das Verfahren umfasst:
- Erkennen (300) der Anwesenheit von Fahrgästen durch eine Vielzahl von Sensoren, die an verschiedenen Stellen an einer Fahrzeughaltestelle installiert ist, wobei die Sensoren unterschiedlichen vordefinierten Zielen oder Fahrzeugrouten zugeordnet sind,
- Identifizieren (302) einer Reiseabsicht der Fahrgäste auf der Basis der erkannten Anwesenheit, und
- Bereitstellen (304) einer Benachrichtigung bezüglich der Reiseabsicht der Fahrgäste an ein Transportfahrzeug (100), das auf einer vordefinierten Route (102) fährt, die die Fahrzeughaltestelle einschließt.

2. Verfahren nach Anspruch 1, wobei die Benachrichtigung das dem Sensor zugeordnete vordefinierte Ziel oder die Fahrzeugroute angibt.

3. Verfahren nach Anspruch 1 oder 2, wobei das Verfahren ferner das Bestimmen (412) einer geänderten Route (110) für das Transportfahrzeug basierend auf einer identifizierten Reiseabsicht eines erkannten Fahrgasts umfasst.

4. Verfahren nach Anspruch 3, wobei die geänderte Route die Fahrzeughaltestelle ausschließt, wenn der Fahrgast nicht beabsichtigt, in das Transportfahrzeug an der Fahrzeughaltestelle gemäß der identifizierten Reiseabsicht des Fahrgasts einzusteigen.

5. Verfahren nach Anspruch 1, wobei eine geänderte Route für das Transportfahrzeug in Abhängigkeit von der von den Sensoren erkannten Anwesenheit von Fahrgästen bestimmt wird.

6. Verfahren nach einem der vorhergehenden Ansprüche, wobei das Verfahren ferner ein Abschätzen (904) umfasst, wie viele Fahrgäste von jedem Sensor erkannt werden, wobei die Benachrichtigung (906) eine geschätzte Anzahl von Fahrgästen angibt, die beabsichtigen, an der Fahrzeughaltestelle in das Transportfahrzeug einzusteigen.

7. Verfahren nach Anspruch 6, wobei das Verfahren ferner das Erkennen (910) umfasst, dass alle Fahrgäste, die in das Transportfahrzeug einzusteigen beabsichtigen, nicht von dem Transportfahrzeug aufgenommen werden können, und Anfordern (912) eines zusätzlichen Transportfahrzeugs, um alle verbleibenden Fahrgäste von der Fahrzeughaltestelle abzuholen.

8. Verfahren nach einem der vorhergehenden Ansprüche, wobei die Sensoren Beliebige von: einer Druckplatte, die auf das Gewicht des Fahrgasts reagiert, einer Kamera, einem Infrarot-Detektor und einer Fotozelle umfassen.

9. Registriervorrichtung (800), die an einer Fahrzeughaltestelle betrieben werden kann und so angeordnet ist, dass sie Informationen als Basis für die Führung eines oder mehrerer Transportfahrzeuge bereitstellt, wobei die Registriervorrichtung (800) umfasst:
- eine Vielzahl von Sensoren (800a), die dazu konfiguriert ist, an verschiedenen Stellen an der Fahrzeughaltestelle installiert zu werden, um die Anwesenheit von Fahrgästen zu erkennen, wobei die Sensoren (800a) verschiedenen vordefinierten Zielen oder Fahrzeugrouten zugeordnet werden können, und
- eine Sendeeinheit (800b), die dazu konfiguriert ist, eine Angabe der erkannten Anwesenheit des Fahrgasts an einen Fahrzeugsteuerungsknoten (802) zu senden, wodurch der Fahrzeugsteuerungsknoten in die Lage versetzt wird, eine Benachrichtigung an mindestens ein Transportfahrzeug bereitzustellen, das auf einer vordefinierten Route fährt, die die Fahrzeughaltestelle einschließt, wobei die Benachrichtigung mit einer Reiseabsicht des Fahrgasts gemäß der erkannten Anwesenheit zusammenhängt.

10. Registriervorrichtung (800) nach Anspruch 9, wobei der Sensor (800a) Beliebige von: einer Druckplatte, die auf das Gewicht des Fahrgasts reagiert, einer Kamera, einem Infrarot-Detektor und einer Fotozelle umfasst.

11. Fahrzeugsteuerungsknoten (802), der zur Führung eines oder mehrerer Transportfahrzeuge angeordnet ist, wobei der Fahrzeugsteuerungsknoten einen Prozessor (P) und einen Speicher (M) umfasst, der durch den Prozessor ausführbare Anweisungen enthält, wobei der Fahrzeugsteuerungsknoten (802) konfiguriert ist zum:
- Empfangen (802a) einer Angabe der erkannten Anwesenheit eines Fahrgasts durch einen Sensor (800a) an einer Fahrzeughaltestelle, wobei der Sensor einem vordefinierten Ziel oder einer Fahrzeugroute zugeordnet ist,
- Identifizieren (802b) einer Reiseabsicht des Fahrgasts basierend auf der erkannten Anwesenheit, und
- Bereitstellen (802c) einer Benachrichtigung bezüglich der identifizierten Reiseabsicht des Fahrgasts an ein Transportfahrzeug, das auf einer vordefinierten Route fährt, die die Fahrzeughaltestelle einschließt, **dadurch gekennzeichnet, dass**
die Anwesenheit von Fahrgästen durch eine Vielzahl von Sensoren erkannt wird, die an verschiedenen Stellen an der Fahrzeughaltestelle installiert ist, wobei die Sensoren verschiedenen vordefinierten Zielen oder Fahrzeugrouten zugeordnet sind.

12. Fahrzeugsteuerungsknoten (802) nach Anspruch 11, wobei die Benachrichtigung das vordefinierte Ziel oder die dem Sensor zugeordnete Fahrzeugroute angibt.

13. Fahrzeugsteuerungsknoten (802) nach Anspruch 11 oder 12, wobei der Fahrzeugsteuerungsknoten (802) dazu konfiguriert ist, eine geänderte Route für das Transportfahrzeug auf der Basis einer identifizierten Reiseabsicht des Fahrgasts zu bestimmen.

14. Fahrzeugsteuerungsknoten (802) nach Anspruch 11, wobei der Fahrzeugsteuerungsknoten (802) dazu konfiguriert ist, abzuschätzen, wie viele Fahrgäste von jedem Sensor erkannt werden, wobei die Benachrichtigung die Anzahl der Fahrgäste angibt, die an der Fahrzeughaltestelle in das Transportfahrzeug einzusteigen beabsichtigen.

15. Fahrzeugsteuerungsknoten (802) nach Anspruch 14, wobei der Fahrzeugsteuerungsknoten (802) dazu konfiguriert ist, zu erkennen, dass alle Fahrgäste, die in das Transportfahrzeug einzusteigen beabsichtigen, nicht von dem Transportfahrzeug aufgenommen werden können, und ein zusätzliches Transportfahrzeug anzufordern, um alle verbleibenden Fahrgäste von der Fahrzeughaltestelle abzuholen.

## Revendications

1. Procédé de guidage d'un ou plusieurs véhicules de transport, le procédé comprenant :
- la détection (300) de la présence de passagers par une pluralité de capteurs installés en différents emplacements à un arrêt de véhicule, les capteurs étant associés à différentes destinations ou différents itinéraires de véhicule prédéfini(e)s,
- l'identification (302) d'une intention de trajet des passagers sur la base de la présence détectée, et
- la fourniture (304) d'une notification se rapportant à l'intention de trajet des passagers à un véhicule de transport (100) se déplaçant sur un itinéraire prédéfini (102) qui inclut ledit arrêt de véhicule.

2. Procédé selon la revendication 1, dans lequel la notification indique la destination ou l'itinéraire de véhicule prédéfini(e) associé(e) du capteur.

3. Procédé selon la revendication 1 ou 2, le procédé comprenant en outre la détermination (412) d'un itinéraire modifié (110) pour le véhicule de transport sur la base d'une intention de trajet identifiée d'un passager détecté.

4. Procédé selon la revendication 3, dans lequel l'itinéraire modifié exclut ledit arrêt de véhicule si le passager ne prévoit pas d'entrer dans le véhicule de transport au niveau de l'arrêt de véhicule selon l'intention de trajet identifiée du passager.

5. Procédé selon la revendication 1, dans lequel un itinéraire modifié est déterminé pour le véhicule de transport en fonction de la présence détectée de passagers par les capteurs.

6. Procédé selon l'une quelconque des revendications précédentes, le procédé comprenant en outre l'estimation (904) du nombre de passagers qui sont détectés par chaque capteur dans lequel la notification (906) indique un nombre estimé de passagers prévoyant d'entrer dans le véhicule de transport au niveau de l'arrêt de véhicule.

7. Procédé selon la revendication 6, le procédé comprenant en outre la détection (910) que tous les passagers prévoyant d'entrer dans le véhicule de transport ne peuvent pas être accueillis par le véhicule de transport, et l'appel (912) d'un véhicule de transport supplémentaire pour collecter des passagers en surplus éventuels à l'arrêt de véhicule.

8. Procédé selon l'un quelconque des revendications précédentes, dans lequel les capteurs comprennent l'un quelconque parmi : une plaque de pression réagissant au poids du passager, une caméra, un détecteur infrarouge et une cellule photoélectrique.

9. Dispositif d'enregistrement (800) étant opérationnel au niveau d'un arrêt de véhicule et agencé pour fournir des informations en tant que base de guidage d'un ou plusieurs véhicules de transport, le dispositif d'enregistrement (800) comprenant :
- une pluralité de capteurs (800a) configurés pour être installés en différents emplacements au niveau de l'arrêt de véhicule pour détecter la présence de passagers, dans lequel les capteurs (800a) peuvent être associés à différentes destinations ou différents itinéraires de véhicule prédéfini(e)s, et
- une unité d'envoi (800b) configurée pour envoyer une indication de la présence détectée du passager à un nœud de commande de véhicule (802), ce qui permet au nœud de commande de véhicule de fournir une notification à au moins un véhicule de transport circulant sur un itinéraire prédéfini qui inclut ledit arrêt de véhicule, la notification se rapportant à une intention de trajet du passager selon la présence détectée.

10. Dispositif d'enregistrement (800) selon la revendication 9, dans lequel le capteur (800a) comprend l'un quelconque parmi :
une plaque de pression réagissant au poids du passager, une caméra, un détecteur infrarouge et une cellule photoélectrique.

11. Nœud de commande de véhicule (802) agencé pour le guidage d'un ou plusieurs véhicules de transport, le nœud de commande de véhicule comprenant un processeur (P) et une mémoire (M) contenant des instructions exécutables par le processeur moyennant quoi le nœud de commande de véhicule (802) est configuré pour :
- recevoir (802a) une indication de présence détectée d'un passager par un capteur (800a) au niveau d'un arrêt de véhicule, le capteur étant associé à une destination ou un itinéraire de véhicule prédéfini(e),
- identifier (802b) une intention de trajet du passager sur la base de la présence détectée, et
- fournir (802c) une notification se rapportant à l'intention de trajet identifiée du passager, à un véhicule de transport circulant sur un itinéraire prédéfini qui inclut ledit arrêt de véhicule **caractérisé en ce que**
la présence de passagers est détectée par une pluralité de capteurs étant installés en différents emplacements au niveau de l'arrêt de véhicule, les capteurs étant associés à différentes destinations ou différents itinéraires de véhicule prédéfini(e)s.

12. Nœud de commande de véhicule (802) selon la revendication 11, dans lequel la notification indique la destination ou l'itinéraire de véhicule prédéfini(e) associé(e) au capteur.

13. Nœud de commande de véhicule (802) selon la revendication 11 ou 12, dans lequel le nœud de commande de véhicule (802) est configuré pour déterminer un itinéraire modifié pour le véhicule de transport sur la base d'une intention de trajet identifiée du passager.

14. Nœud de commande de véhicule (802) selon la revendication 11, dans lequel le nœud de commande de véhicule (802) est configuré pour estimer le nombre de passagers qui sont détectés par chaque capteur dans lequel la notification indique le nombre de passagers prévoyant d'entrer dans le véhicule de transport au niveau de l'arrêt de véhicule.

15. Nœud de commande de véhicule (802) selon la revendication 14, dans lequel le nœud de commande de véhicule (802) est configuré pour détecter que tous les passagers prévoyant d'entrer dans le véhicule de transport ne peuvent pas être accueillis par le véhicule de transport, et pour appeler un véhicule de transport supplémentaire pour collecter des passagers en surplus éventuels à l'arrêt de véhicule.
